# EUROPÄISCHE PATENTSCHRIFT

(11) **EP 1 043 115 B1**
(45) Veröffentlichungstag und Bekanntmachung des Hinweises auf die Patenterteilung: **17.07.2002**
(21) Anmeldenummer: 00106196.9
(22) Anmeldetag: 22.03.2000
(51) Int. Cl.: B23Q 3/10, F16B 7/18

(54) **Strebe zur Verbindung von Aufnahmerohren für ein System zum Aufbau von Vorrichtungen zum Aufspannen von Werkstücken**
Strut for connection of profiled pipes of a work piece fixing system
Tige pour connecter des éléments tubulaires d'un système de fixation des pièces

(30) Priorität: 07.04.1999 DE 29906191 U
(43) Veröffentlichungstag der Anmeldung: 11.10.2000
(73) Patentinhaber: Horst Witte Entwicklungs- und Vertriebs-KG, 21369 Nahrendorf (DE)
(72) Erfinder: Horst Witte Entwicklungs- und Vertriebs-KG, 21369 Nahrendorf (DE)
(74) Vertreter: von Raffay, Vincenz, Dipl.-Ing.

(56) Entgegenhaltungen:
- DE-A- 4 213 365
- DE-U- 9 216 764
- US-A- 4 822 199

## Beschreibung

Die Erfindung betrifft eine Strebe nach dem Oberbegriff des Anspruches 1.

Aus der EP-PS 222 147 ist ein System zum Aufbau von Vorrichtungen zum Aufspannen von Werkstücken bekannt, zu dem ein quaderförmiges oder quadratisches Aufnahmerohr gehört, das Rasterpunkte in Form von Bohrungen aufweist, die so, wie vorstehend definiert, angeordnet sind. Eine Weiterentwicklung dieses Aufnahmerohres ist aus dem DE-GM 90 04 573 bekannt.

Aus dem DE-GM 92 16 764 ist eine weitere Ausführungsform eines Aufnahmerohres bekannt, das an seiner Innenwand Erhöhungen aufweist, die der Abstützung von Verbindungselementen dienen. In dem älteren DE-GM ist eine Weiterentwicklung eines Aufnahmerohres beschrieben, bei dem die Rasterpunkte durch konkave Kugelkalotten gebildet werden, deren Mittelpunkte auf in bestimmter Weise angeordneten, konkaven Kugelkalotten liegen.

Der Erfindung liegt nun die Aufgabe zugrunde, eine Strebe der eingangs genannten Art zu schaffen, durch die die verschiedenen, bekannten Aufnahmerohre gleicher Form und Gestalt, aber auch unterschiedlicher Form und Gestalt untereinander, unter vorzugsweise einem rechten Winkel miteinander verbunden, d.h. vertrebt, werden können.

Diese Aufgabe wird grundsätzlich durch das Kennzeichen des Anspruches 1 gelöst.

Die Strebe nach der Erfindung besteht aus einem Strebenrohr und zwei Spannschrauben, die praktisch nach Art eines Wantenspanners ausgebildet sind, d.h. die Strebe kann durch Verdrehen des Strebenrohres verkürzt und verlängert werden, und zwar stufenlos, da die Spannschrauben jeweils ein Rechts- und ein Linksgewinde aufweisen. Die freien Enden der Spannschrauben sind mit einem besonderen, kugelförmigen Kopf versehen, um über Bohrungen und Befestigungselemente eine einfache und sichere Verbindung zu den Rasterpunkten der Aufnahmerohre herzustellen, die miteinander verbunden, d.h. verstrebt werden sollen. Die Aufnahmebohrung in dem kugelförmigen Kopf nimmt entweder ein Druckstück oder eine Mutter auf.

Wenn es sich um eine Mutter handelt, so wird die Befestigungsschraube in diese eingeschraubt, d.h. der Schraubenkopf stützt sich in dem Aufnahmerohr in einer entsprechenden Bohrung in dem Rasterpunkt ab. Wenn es sich um ein Druckstück handelt, dann liegt der Schraubenkopf der Befestigungsschraube an diesem Druckstück an und ist in ein Gewinde in dem Rasterpunkt des Aufnahmerohres eingeschraubt.

Besonders vorteilhafte Ausgestaltungen sind Gegenstand der Ansprüche 2 bis 5.

Im folgenden wird die Erfindung unter Hinweis auf die Zeichnungen anhand verschiedener Ausführungsbeispiele näher erläutert.

### (weiter ursprüngliche Unterlagen Seite 3 der Beschreibung)

Es zeigt:
- Fig. 1: eine perspektivische Ansicht zweier Aufnahmerohre mit einer Vielzahl von Rasterpunkten in Form von Querbohrungen, die mit Hilfe einer Ausführungsform einer Strebe nach der Erfindung im rechten Winkel zueinander aufgestellt sind;
- Fig. 2: eine Teilansicht der Darstellung der Fig. 1 von einer Stirnseite im vergrößerten Maßstab;
- Fig. 3: eine Einzelheit zur Darstellung einer möglichen Verbindung von einem kugelförmigen Kopf mit einem Aufnahmerohr, wie es in Fig. 1 dargestellt ist;
- Fig. 4: eine der Fig. 1 entsprechende perspektivische Ansicht, jedoch einer Verbindung eines Aufnahmerohres mit einer Vielzahl von Querbohrungen mit einem anderen Aufnahmerohr, bei dem die Rasterpunkte in Form von konkaven Kugelkalotten mit Bohrungen ausgebildet sind;
- Fig. 5: eine Einzelheit der Ausführungsform nach Fig. 4 in vergrößertem Maßstab;
- Fig. 6: eine den Fig. 1 und 4 entsprechende perspektivische Ansicht, jedoch einer Verbindung zweier Aufnahmerohre mit Rasterpunkten in Form von Kugelkalotten als Rasterpunkte zur Verbindung durch eine Strebe nach der Erfindung;
- Fig. 7: eine Teilansicht der Ausführungsform nach Fig. 6 von einer Stirnseite im vergrößerten Maßstab;
- Fig. 8: eine Einzelheit der Darstellung der Fig. 6 im vergrößerten Maßstab;
- Fig. 9: eine auseinandergezogene, perspektivische Ansicht einer Ausführungsform eines kugelförmigen Kopfes der Strebe mit besonderen Befestigungselementen;
- Fig. 10: einen Schnitt durch die Darstellung der Fig. 9 mit eingesetzten Verbindungselementen; und
- Fig. 11: eine der Fig. 9 entsprechende perspektivische Ansicht, jedoch mit anderen Befestigungselementen.

In der Zeichnung sind gleiche Teile mit gleichen Bezugszeichen bezeichnet.

Die Strebe besteht aus drei Hauptbauteilen, nämlich einem Strebenrohr mit einem Innengewinde an jedem Ende und einer Spannschraube 5, von denen die eine ein Linksgewinde und die andere ein Rechtsgewinde aufweist. Derartige Streben- oder Spannelemente sind als sog. "Wantenspanner" bekannt.

Eine Kontermutter 6 für jede Spannschraube dient der Fixierung der eingenommenen Stellung. Anstelle der Kontermutter 6 kann auch ein Klebstoff in Öffnungen 7 eingebracht werden.

Jede Spannschraube 5 weist an ihrem dem Gewinde gegenüberliegenden freien Ende einen kugelförmigen Kopf auf. Dieser kugelförmige Kopf ist mit einer Aufnahmebohrung 11 für ein entsprechend angepaßtes Druckstück 13 oder eine angepaßte Mutter 18 und mit einem Schlitz für eine Befestigungsschraube 14 oder 19 versehen. Der kugelförmige Kopf wird mit Hilfe dieser Befestigungselemente an einem ausgewählten Rasterpunkt, gebildet durch eine Bohrung 4, in dem Aufnahmerohr 1 oder 2 befestigt. Dann wird durch Verdrehen des Aufnahmerohres 3 die genaue Länge eingestellt, so daß die beiden Aufnahmerohre den gewünschten rechten Winkel zueinander bilden. Dann werden die Befestigungsschrauben festgezogen. Diese Strebe stellt ein einfaches und sehr universell einsetzbares Mittel dar, um die unterschiedlichsten Aufnahmerohre miteinander zu verbinden, d.h. zu verstreben. Die Länge der Gewinde der Spannschrauben ist so groß, daß bei einer vorgegebenen Länge der Strebe lückenlos die durch das Rastermaß vor gegebenen Abstufungen unter Einhaltung einer Mindesteinschraublänge zur Aufnahme der auftretenden Kräfte ausgeglichen werden können.

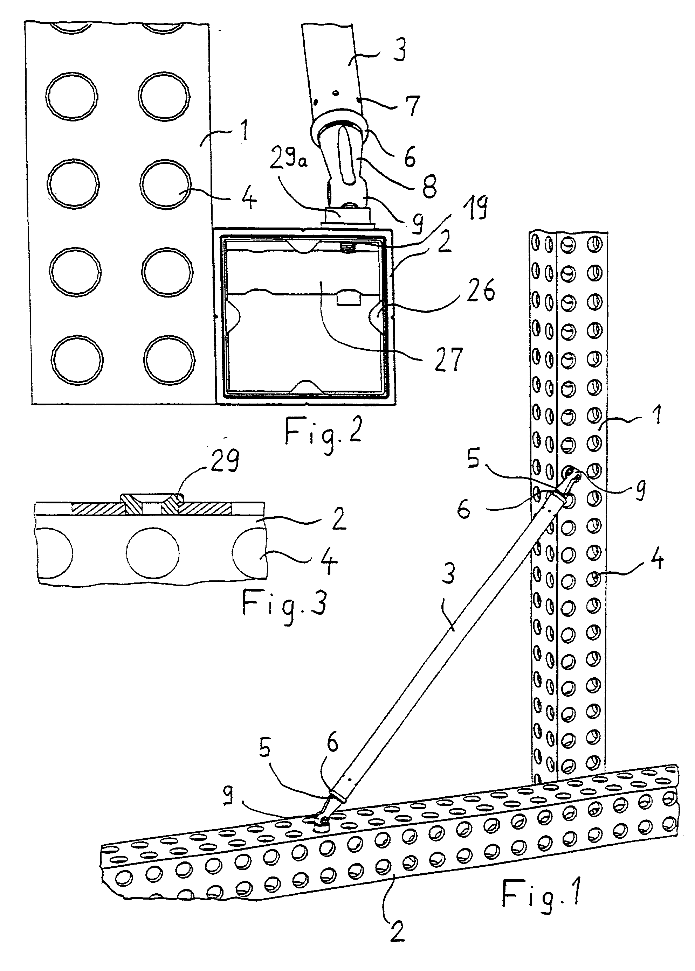

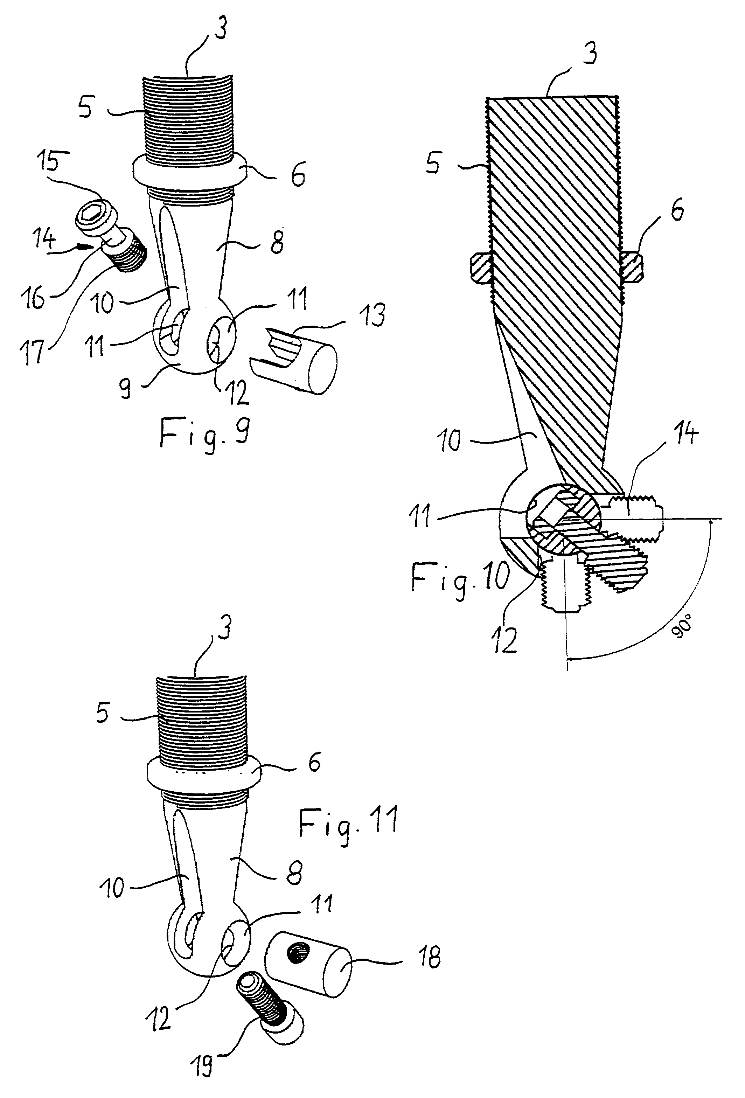

Bei der Ausführungsform nach den Fig. 1 bis 3 weisen die Aufnahmerohre 1 und 2 innen Erhöhungen 26 als Anlage von Verbindungselementen 27 auf. Eine Schraube 19 wird in eine Mutter 18 eingeschraubt, die in dem kugelförmigen Kopf 9 in einer Aufnahmebohrung 12 liegt, die im einzelnen in Verbindung mit den Fig. 9 und 10 noch beschrieben wird. Zwischen Kugelkopf 9 und Aufnahmerohr liegt eine Buchse 29 oder 29a. Die Buchse 29a ist etwas höher als die Buchse 29. Diese Buchse weist eine konkave Kugelkalotte auf, um den kugelförmigen Kopf 9 aufzunehmen. Es ist aber auch möglich, direkt die Bohrung 4 mit einer Fase zu versehen, so daß der kugelförmige Kopf 9 hier sicher zur Anlage kommt.

Grundsätzlich gibt es zwei Möglichkeiten der Verbindung des kugelförmigen Kopfes 9 mit dem Aufnahmerohr.

In den Fig. 9 bis 11 ist der Kugelkopf am freien Ende einer Spannschraube 5 im einzelnen dargestellt. Quer zur Achsrichtung ist eine Aufnahmebohrung 11 vorgesehen, in die ein Druckstück 13 paßt, das gabelförmig ausgebildet ist und innen in der Gabel eine Anlageschulter für die entsprechende Stirnfläche des Kopfes 15 einer Befestigungsschraube 14 aufweist. Bei dieser Ausführungsform weist die Befestigungsschraube 14 eine Freidrehung 16 zwischen dem Schraubenkopf 15 und dem Gewinde 17 auf.

In der Mittelebene in Achsrichtung der Strebe 3 ist ein Langloch 12 vorgesehen, das sich so über 90° erstreckt, wie es beim Betrachten der Fig. 10 deutlich wird. Das Langloch 12 ist in Draufsicht nach Art eines Schlüsselloches ausgebildet, so daß die Schraube mit ihrem Kopf 15 in den größeren Abschnitt des schlüssellochförmigen Langloches eingesteckt werden kann, so daß der Kopf dann in dem durch die Aufnahmebohrung 11 gebildeten Innenraum liegt. Über die Freidrehung 16 kann dann das Druckstück 13 mit seiner Gabel geschoben werden.

Dem Langloch gegenüberliegend befindet sich ein Schlitz 10, in den ein Werkzeug, beispielsweise ein Sechskantschlüssel, eingeführt werden kann. Der Schlitz 10 weist eine schlitzförmige Ausfräsung im Bereich des Schaftes 8, der den kugelförmigen Kopf 9 mit dem Gewinde 5 verbindet, auf.

Wenn die Befestigungsschraube 14 mit dem gabelförmigen Druckstück 13 innerhalb des kugelförmigen Kopfes 9 liegt, so kann der Schraubenkopf 15 durch den Schlitz 10 ein Werkzeug aufnehmen und in ein entsprechendes Gewinde in dem Aufnahmerohr eingeschraubt werden. Hierbei kann die Strebe 3 praktisch jede Winkelstellung einnehmen. Da die Spannschraube 5 in dem Strebenrohr 3 verdrehbar ist, ist eine Schwenkbewegung der Strebe um 180° praktisch in jede beliebige Stellung möglich, obwohl die Schraube nur um 90° schwenkbar ist.

Die Ausführungsform nach Fig. 11 unterscheidet sich dadurch von derjenigen nach den Fig. 9 und 10, daß anstelle des gabelförmigen Druckstückes 13 eine Mutter 18 in die Aufnahmebohrung 11 eingeführt wird. In diesem Falle liegt das Gewinde in der Mutter 18, in die die Schraube 19, so wie bei der Ausführungsform nach Fig. 1 bis 3 dargestellt, eingeschraubt wird. Der Schraubenkopf liegt dann an dem Befestigungselement 27 in dem Aufnahmerohr 2 an.

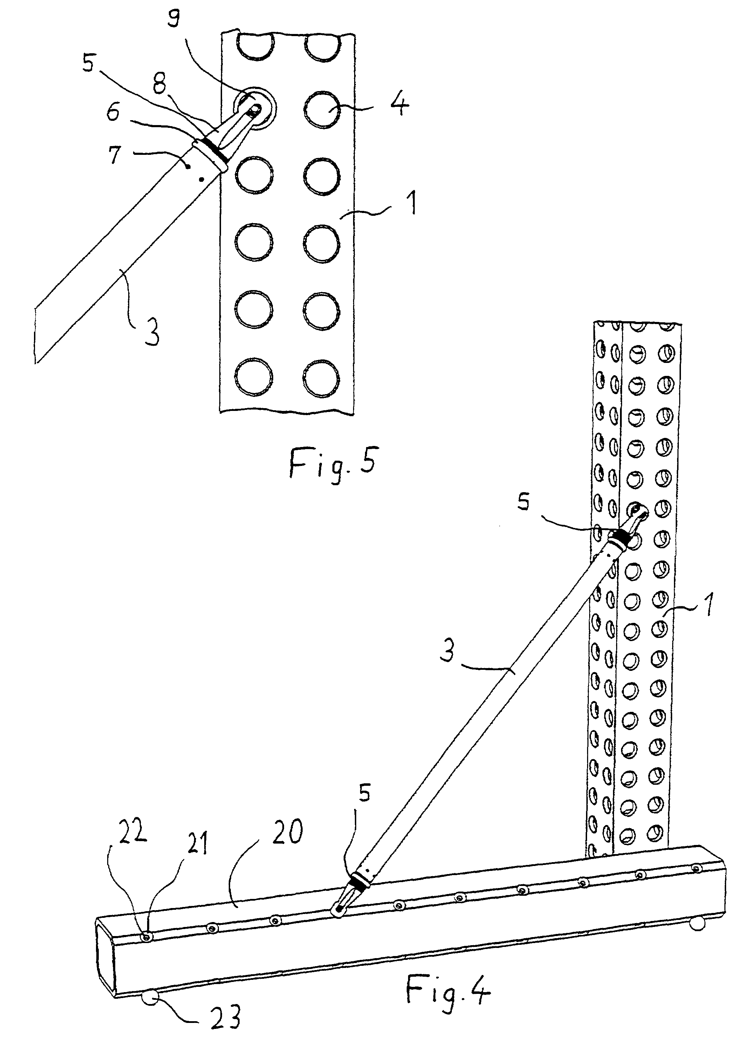

Bei der Ausführungsform nach den Fig. 4 und 5 verbindet eine Strebe 3 ein Aufnahmerohr 1 mit einem Aufnahmerohr 20. Das Aufnahmerohr 1 ist so ausgebildet, wie dasjenige bei der Ausführungsform nach Fig. 1, d.h. mit einer Vielzahl von Bohrungen 4. Das Aufnahmerohr 20 weist Rasterpunkte auf, die durch konkave Kugelkalotten 21 gebildet werden, in deren Mittelpunkte Gewinde 22 vorgesehen sind. Kugelförmige Füße sind mit 23 bezeichnet. Diese Art der Ausbildung eines Aufnahmerohres ist in dem älteren Vorschlag nach dem GM 298 12 280 beschrieben. Der kugelförmige Kopf 9 wird mit diesem Aufnahmerohr 20 mit Hilfe von Befestigungselementen verbunden, wie sie in den Fig. 9 und 10 dargestellt sind. Die Verbindung mit dem Aufnahmerohr 1 und dem angrenzenden Kugelkopf der entsprechenden Spannschraube 5 erfolgt mit Hilfe von Befestigungselementen, wie sie in Fig. 11 dargestellt sind.

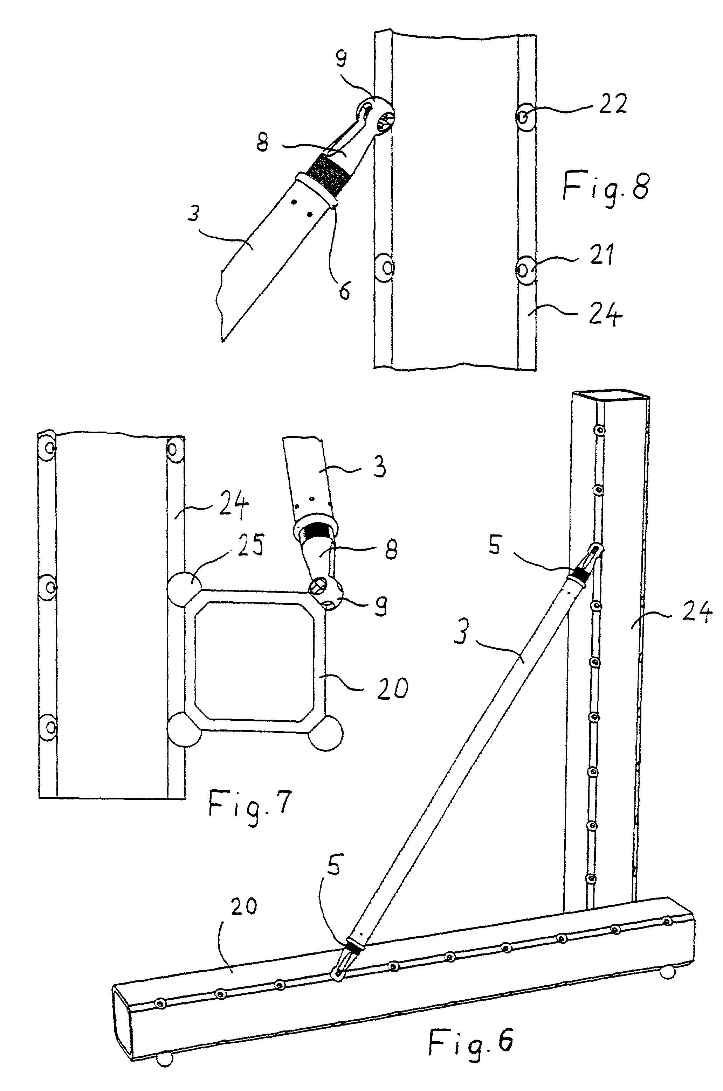

Bei der Ausführungsform nach den Fig. 6 bis 8 werden zwei Aufnahmerohre 20 und 24 miteinander verstrebt, die so gestaltet sind, wie das Aufnahmerohr 20 bei der Ausführungsform nach Fig. 4. Hier sind wieder in den Fasen 24 an den Kanten des Aufnahmerohres 20 Rasterpunkte in Form von konkaven Kugelkalotten 21 mit Gewindebohrungen 22 vorgesehen, in die im Falle der Verbindung mit der Strebe 3 entsprechende Schrauben 14 (Fig. 9 und 10) eingeschraubt sind.

Grundsätzlich verbindet die Strebe nach der Erfindung die unterschiedlichsten Aufnahmerohre, wobei zuerst die Verbindung mit den Aufnahmerohren und den Spannschrauben hergestellt wird. Dann wird der genaue Winkel eingestellt und schließlich werden die Befestigungsschrauben 14 oder 19 festgezogen. Die Streben können über eine relativ große Länge, bedingt durch die Länge des Gewindes jeder Spannschraube 5, eingestellt werden, so daß auf jeden Fall die Abstände zwischen den einzelnen Rasterpunkten überbrückt werden können.

## Patentansprüche

1. Strebe zur Verbindung von vorzugsweise unter einem rechten Winkel zueinander anzuordnenden Aufnahmerohren zum Aufbau von Vorrichtungen zum Aufspannen von Werkstücken auf Werkzeugmaschinentischen in definierter und reproduzierter Lage, mit in regelmäßigen Koordinatenabständen ausgebildeten Rasterpunkten in Form von Bohrungen, **dadurch gekennzeichnet, daß** in die Enden eines Strebenrohres (3) je eine Spannschraube (5) eingeschraubt ist, von denen eine ein Linksgewinde und die andere ein Rechtsgewinde aufweist, und die an ihren freien Enden einen kugelförmigen Kopf mit Bohrungen (11,12) zur Aufnahme von Befestigungselementen zur Verbindung mit den die Rasterpunkte bildenden Bohrungen (4,21,22) aufweisen, und daß der kugelförmige Kopf eine quer zur Achsrichtung des Strebenrohres (3) verlaufende Aufnahmebohrung (11) für ein angepaßtes Druckstück 13 oder eine angepaßte Mutter 18,
in der Mittelebene senkrecht zu dieser Aufnahmebohrung ein sich in dieser Mittelebene erstreckendes Langloch (12) für die Befestigungsschraube (14 oder 19) und diesem Langloch gegenüber in der Mittelebene einen Schlitz (10) für ein Werkzeug aufweist.

2. Strebe nach Anspruch 1, **dadurch gekennzeichnet, daß** in dem Schaft (8), der den kugelförmigen Kopf (9) mit der Spannschraube (5) verbindet, eine schlitzförmige Aussparung als Fortsetzung des Schlitzes (10) für ein Werkzeug vorgesehen ist.

3. Strebe nach Anspruch 1 oder 2, **dadurch gekennzeichnet, daß** sich das Langloch (12) über einen Winkel von 90° in der Mittelebene, ausgehend von der Achse des Strebenrohres (3) bis quer zu dieser erstreckt.

4. Strebe nach Anspruch 1 oder 3, **dadurch gekennzeichnet, daß** das Langloch (12) in Draufsicht die Form eines Schlüsselloches aufweist, wobei der größere Abschnitt auf der Achse des Strebenkopfes (3) liegt und das Durchstecken des Schraubenkopfes (15) der Schraube (14) erlaubt.

5. Strebe nach Anspruch 1, **dadurch gekennzeichnet, daß** die Befestigungsschraube (14) zwischen ihrem Schraubenkopf (15) und ihrem Gewinde (17) eine Freidrehung (16) aufweist, und
daß das Druckstück (13) gabelförmig ausgebildet ist, wobei der Gabelschlitz eine Schulter zur Auflage der der Freidrehung (16) zugekehrten Stirnfläche des Schraubenkopfes (15) aufweist.

## Claims

1. Strut for joining holding tubes preferably to be arranged under a right angle to one another for building up devices for the supporting of workpieces on machine tool tables in a clearly defined, reproducible position, with raster points in the form of holes formed with regular coordinate spacings, **characterized in that** into the ends of a strut tube (3) is in each case screwed one clamp bolt (5), whereof one has a left-hand thread and the other a right-hand thread and which at their free ends have a spherical head with holes (11, 12) for receiving fastening elements for joining to the holes (4, 21, 22) forming the raster points, and that the spherical head has a reception hole (11) at right angles to the axial direction of the strut tube (3) for an adapted thrust piece (13) or an adapted nut (18), and **in that** in the median plane perpendicular to said reception hole there is an oblong hole (12) extending in said median plane for the fastening screw (14 or 19) and facing said oblong hole and in the median plane there is a slot (10) for a tool.

2. Strut according to claim 1, **characterized in that** in the shaft (8), which connects the spherical head (9) to the clamp bolt (5), is provided a slot-like notch as an extension of the slot (10) for a tool.

3. Strut according to claim 1 or 2, **characterized in that** the oblong hole (12) extends over an angle of 90° in the median plane, starting from the axis of the strut tube (3) and extending to right angles thereto.

4. Strut according to claim 1 or 3, **characterized in that** the oblong hole (12) in plan view is shaped like a keyhole, the larger portion being located on the axis of the strut tube (3) and permits the passing through of the head (15) of screw (14).

5. Strut according to claim 1, **characterized in that** the fastening screw (14) has a recess (16) between its head (15) and its thread (17) and that the thrust piece (13) has a fork-shape, the fork slot having a shoulder for supporting the end face of the screw head (15) facing the recess (16).

## Revendications

1. Entretoise pour connecter des tubes de support, à disposer de préférence à angle droit les uns par rapport aux autres, dans le but de construire des dispositifs pour fixer des pièces sur des tables de machine-outil, en une position définie et reproduite, avec des points de repère tramé réalisés sous des espacements de coordonnées réguliers, sous la forme de perçages, **caractérisée en ce que**, dans chacune des extrémités d'un tube d'entretoise (3), est vissée une vis de serrage (5) dont l'une présente un filtage est à gauche et l'autre présente un filetage à droite et qui présentent sur leurs extrémités libres une tête à forme sphérique munie de perçages (11, 12) pour recevoir des éléments de fixation pour assurer la liaison aux perçages (4, 21, 22) formant les points de repérage tramés, et **en ce que** la tête sphérique présente un perçage de logement (11) s'étendant transversalement par rapport à la direction axiale du tube d'entretoise (3), pour une pièce de pressage (13) adaptée ou un écrou (18) adapté, et présente, dans le plan médian perpendiculaire à ce perçage de logement, un trou allongé (12) s'étendant dans ce plan médian, pour la vis de fixation (14 ou 19) et, en face de ce trou allongé, dans le plan médian, une fente (10) pour un outil.

2. Entretoise selon la revendication 1, **caractérisée en ce que** dans le fût (8), qui relie la tête (9) sphérique à la vis de serrage (5) est prévu un évidement en forme de fente faisant office de continuation de la fente (10), pour un outil.

3. Entretoise selon la revendication 1 ou 2, **caractérisée en ce que** le trou allongé (12) s'étend sur un angle de 90° dans le plan médian en partant de l'axe du tube d'entretoise (3), jusqu'à la perpendiculaire à celui-ci.

4. Entretoise selon la revendication 1 ou 3, **caractérisée en ce que** le trou allongé (12), observé en vue de dessus, présente la forme d'un trou de serrure, la section la plus grande étant située sur l'axe de la tête d'entretoise (3) et permettant le passage de la tête de vis (15) appartenant à la vis (14).

5. Tige ou entretoise selon la revendication 1, **caractérisée en ce que** la vis de fixation (14) présente, entre sa tête de vis (15) et son filetage (17), une saignée venant de tournage (16), et **en ce que** la pièce de pressage (13) est conformée en fourche, la fente de fourche présentant un épaulement pour poser la face frontale tournée vers la saignée venant de tournage (16) de la tête de vis (15).
